# EUROPÄISCHE PATENTSCHRIFT

(11) **EP 2 776 293 B1**
(45) Veröffentlichungstag und Bekanntmachung des Hinweises auf die Patenterteilung: **19.06.2019**
(21) Anmeldenummer: 12783565.0
(22) Anmeldetag: 30.10.2012
(51) Int. Cl.: B60T 7/04, B60T 8/1766

(54) **VERFAHREN UND VORRICHTUNG ZUR ELEKTRONISCHEN REGELUNG DER BREMSKRAFTVERTEILUNG IN ABHÄNGIGKEIT VOM DIFFERENZSCHLUPF**
METHOD AND DEVICE FOR THE ELECTRONIC CONTROL OF THE BRAKE FORCE DISTRIBUTION ACCORDING TO THE DIFFERENTIAL SLIP
PROCÉDÉ ET DISPOSITIF DE RÉGULATION ÉLECTRONIQUE DE LA RÉPARTITION DE LA FORCE DE FREINAGE EN FONCTION DU GLISSEMENT DIFFÉRENTIEL

(30) Priorität: 10.11.2011 DE 102011118130
(43) Veröffentlichungstag der Anmeldung: 17.09.2014
(73) Patentinhaber: KNORR-BREMSE Systeme für Nutzfahrzeuge GmbH, 80809 München (DE)
(72) Erfinder: LAUSER, Wilfried, 71299 Wimsheim (DE); MUSTAPHA, Adnan, 75433 Maulbronn (DE); WEBER, Christian, 71701 Schwieberdingen (DE); LEIBBRAND, Norbert, 75417 Mühlacker (DE); WIEDER, Gerhard, 74354 Besigheim (DE)
(86) Internationale Anmeldenummer: PCT/EP2012/071498
(87) Internationale Veröffentlichungsnummer: WO 2013/068281

(56) Entgegenhaltungen:
- EP-A2- 0 357 983
- WO-A1-03/011664
- DE-A1-102006 045 317

## Beschreibung

Die Erfindung geht aus von einem Verfahren zur elektronischen Regelung der Bremskraftverteilung in Abhängigkeit von einem Differenzschlupf zwischen der Vorderachse und der Hinterachse eines Fahrzeugs, bei welcher bei einem Überschreiten eines Differenzschlupf-Schwellwerts durch den Differenzschlupf der Bremsdruck an der Hinterachse begrenzt wird, gemäß dem Oberbegriff von Anspruch 1 sowie von einer Vorrichtung zur Ausführung des Verfahrens nach Anspruch 4.

In schweren Nutzfahrzeugen ist in der Regel über der Vorderachse ein Dieselmotor eingebaut, der über eine Kardanwelle die Hinterachse antreibt. Durch diese Anordnung ist die Last der Hinterachse stark von der Beladung des Nutzfahrzeugs abhängig. Deshalb wird die vom Fahrer über das Bremspedal eingesteuerte Bremskraft an der Hinterachse bei herkömmlichen Bremsanlagen über ein pneumatisches Ventil mit einem Achslastsensor begrenzt (ALB, automatisch-lastabhängige Bremse). Dadurch wird erreicht, dass beim unbeladenen Fahrzeug nicht der volle, vom Fahrer gewünschte Bremsdruck an der Hinterachse ansteht und somit die Blockierneigung der Hinterachse verringert wird. Außerdem wird ein höherer Bremskomfort ermöglicht sowie die Standzeit der Hinterachsbremse verlängert.

Zusätzlich zur automatisch-lastabhängige Bremse (ALB) haben heutige Nutzfahrzeuge ein Antiblockiersystem (ABS). Dieses verfügt an jedem Rad über einen Drehzahlsensor (Induktivsensor) und ein Drucksteuerventil, das den vom Fahrer über das Bremspedal eingestellten Druck modulieren kann. Das ABS tritt bei Blockierneigung eines Rades in Aktion.

In der EP 0 357 983 A2 wird ein Verfahren zur Durchführung einer lastabhängigen Regelung des Bremsdrucks an einem Nutzfahrzeug beschrieben, bei dem eine zwischenachsige Bremsdruckverteilung ausgehend von einem ladungsspezifisch abgespeicherten Referenz- oder Startwert selbstlernend nachgeführt wird. Dabei erfolgt die Nachführung in Stufen, deren Weite ausgehend von einem Minimalwert in Abhängigkeit von der Größe der Überschreitung eines vorgebbar festgelegten Grenzwertes durch die Differenz zwischenachsiger Raddrehzahlen bei Bremsung gesteuert wird.

In der WO 03/011664 A1 wird eine Bremsanlage für Nutzfahrzeuganhänger beschrieben, bei der die Bremsen der Vorderachse des Nutzfahrzeuganhängers durch ein einziges gemeinsames ABS-Ventil angesteuert werden, das beiden Vorderachsbremsen zugeordnet ist und das von einer primär den Hinterachsbremsen zugeordneten Bremselektronik in Abhängigkeit vom Differenzschlupf angesteuert wird. Dabei wird der Vorderachsbremsdruck so geregelt, dass der bei einer Bremsung an den Vorderrädern und den Hinterrädern auftretende Schlupf gleich ist.

Aus weiteren dem Stand der Technik, beispielsweise aus der DE 10 2006 045 317 A1, ist eine sog. EBD-Funktion (Electronic Brake Force Distribution) bekannt, die mit Hilfe von ABS-Drucksteuerventilen die automatisch lastabhängige Bremse (ALB-Funktion) realisiert und somit das Lastventil einspart. Da das ABS im Gegensatz zur automatisch-lastabhängigen Bremse (ALB) über keinen Lastsensor verfügt, wird der Beladungszustand mit Hilfe der Geschwindigkeitsdifferenz zwischen Vorder- und Hinterachse (v_{VA}-v_{HA}) beim Bremsen ermittelt. Je geringer die Hinterachslast ist, umso mehr Schlupf entsteht an der Hinterachse bei gleicher Bremsbetätigung, d.h. umso größer wird die Geschwindigkeitsdifferenz v_{VA}-v_{HA}. An der Vorderachse wirkt sich der Unterschied zwischen beladenem und unbeladenem Fahrzeug wegen der Motoranordnung wesentlich weniger aus. Somit kann die Geschwindigkeitsdifferenz v_{VA}-v_{HA} beim Bremsen als Maß für die Beladung herangezogen werden. Mit anderen Worten sperrt EBD bei einem Bremsvorgang die Hinterachsbremsen, unter Umständen auch ein einzelnes Hinterrad, abhängig vom Differenzschlupf zwischen Vorder- und Hinterachse durch Aktivierung der ABS-Ventile vom weiteren Druckaufbau ab.

Falls jedoch die Vorderachsbremsen defekt sind, also die Vorderachse schwächer als normal oder gar nicht bremst, kann die Geschwindigkeitsdifferenz v_{VA}-v_{HA} sehr groß werden. Dann würde die EBD-Funktion die ABS-Ventile an der Hinterachse auf "Druckhalten" stellen und den Bremsdruck an der Hinterachse begrenzen. In diesem Fall wäre das Nutzfahrzeug jedoch unterbremst. Weiterhin ergibt sich bei einem nur sehr wenig oder unbeladenem Fahrzeug das Problem, dass die Bremsdruckregelung wenig feinfühlig ist, da in diesem Fall der Differenzschlupf zwischen Vorder- und Hinterachse relativ groß wird und ein vorgegebener Differenzschlupfschwellwert schnell überschritten wird.

Der vorliegenden Erfindung liegt demgegenüber die Aufgabe zugrunde, ein Verfahren der eingangs erwähnten Art derart weiter zu entwickeln, dass sich eine feinfühligere Bremsdruckregelung bei zugleich kürzerem Bremsweg ergibt.

Diese Aufgabe wird erfindungsgemäß durch die Merkmale von Anspruch 1 gelöst.

### Offenbarung der Erfindung

Das Verfahren gemäß der Erfindung sieht vor, dass der Differenzschlupf-Schwellwert bzw. der Differenzgeschwindigkeits-Schwellwert in Abhängigkeit von der erfassten Fahrer-Bremsanforderung bestimmt wird. Vorzugsweise wird der Differenzschlupf-Schwellwert bzw. der Differenzgeschwindigkeits-Schwellwert mit steigender Bremsanforderung erhöht. Mit anderen Worten wird bei einer relativ geringen Fahrer-Bremsanforderung ein relativ kleiner Differenzschlupf-Schwellwert eingestellt und bei einer relativ großen Bremsanforderung ein relativ großer Differenzschlupfschwellwert.

Die erfindungsgemäße Vorrichtung zur elektronischen Regelung der Bremskraftverteilung in Abhängigkeit von einem Differenzschlupf oder Differenzgeschwindigkeit zwischen wenigstens einem Rad der Vorderachse und wenigstens einem Rad der Hinterachse eines Fahrzeugs, beinhaltet:
- einen Sensor zur Messung der Raddrehzahlen des Rads der Vorderachse,
- einen Sensor zur Messung der Raddrehzahlen des Rads der Hinterachse,
- ein elektronisches Steuergerät zur Berechnung eines Differenzschlupfs oder einer Differenzdrehzahl zwischen dem wenigstens einen Rad der Vorderachse und dem wenigstens einen Rad der Hinterachse, wobei
- das elektronische Steuergerät derart ausgebildet ist, dass bei einem Überschreiten eines Differenzschlupf-Schwellwerts oder eines Differenzgeschwin- digkeits-Schwellwerts durch den Differenzschlupf oder durch die Differenzgeschwindigkeit der Bremsdruck an der Hinterachse begrenzt wird, und wobei
- ein Bremswertgeber zur Erzeugung eines von einer Bremsanforderung abhängigen Signals vorgesehen ist, und das elektronische Steuergerät weiterhin derart ausgebildet ist, dass es den Differenzschlupf-Schwellwert oder den Differenzgeschwindigkeits-Schwellwert in Abhängigkeit von dem die Bremsanforderung repräsentierenden Signal des Bremswertgebers bestimmt.

Wie bereits eingangs erläutert, wird bei einem Überschreiten des Differenzschlupf-Schwellwerts bzw. des Differenzgeschwindigkeits-Schwellwerts durch den gerade vorliegenden Differenzschlupf bzw. die gerade vorliegende Differenzgeschwindigkeit der Bremsdruck an der Hinterachse begrenzt, d.h. gegenüber einem entsprechend der Fahrer-Bremsanforderung vorgegebenen höheren Wert begrenzt.

Einerseits wird daher weiterhin mit Hilfe der ABS-Drucksteuerventile eine ALB-Funktion im oben beschriebenen Sinne realisiert, ohne dass hierfür ein Lastventil notwendig wäre bzw. verwendet wird. Andererseits wird zusätzlich die Bremsanforderung durch den Fahrer berücksichtigt, so dass bei Teilbremsungen (geringe Bremsanforderung) im unbeladenen Zustand relativ kleine Differenzschlupf-Schwellwerte vorgegeben werden und daher feinfühliger geregelt und gebremst werden kann. Dies ist insbesondere deswegen vorteilhaft, weil die meisten Bremsungen Teilbremsungen mit geringer Bremsanforderung sind.

Die Information über die Bremsanforderung durch den Fahrer wird daher zum Erkennen benötigt, ob eine Erhöhung des Bremsdrucks an der Hinterachse, beispielsweise bei nicht bremsender Vorderachse, vorgenommen werden muss, obwohl anhand der Geschwindigkeitsdifferenz v_{VA}-v_{HA} bzw. Schlupfdifferenz eigentlich eine Bremsdruckerhöhung an der Hinterachse unterbunden werden würde.

Die Regelungslogik ist daher so ausgelegt, dass beim normalen Bremsen mit geringer oder mittlerer Bremsanforderung und bei gering oder unbeladenem Fahrzeug ein Eingriff stattfindet, bevor an der Hinterachse die ABS-Regelung anläuft. Starke Bremsungen werden durch die erfasste Fahrer-Bremsanforderung erkannt. Durch eine entsprechende Anpassung der Differenzschlupfschwelle abhängig von der erfassten Fahrer-Bremsanforderung wird ein feinfühliger Übergang zur ABS-Regelung gewährleistet.

Die Bremsanforderung durch den Fahrer kann über verschiedene Sensoren erfasst werden, z.B. durch einen Drucksensor in einem pneumatischen Bremskreis, durch ein elektrisches Signal eines elektrischen Bremswertgebers in einem digitalen Fußbremsmodul oder es kann auch ein entsprechendes Signal des Fahrzeug-CAN-Busses ausgewertet werden.

Als Vorteile des erfindungsgemäßen Verfahrens können folglich eine feinfühlige Stufbarkeit der Bremse bzw. Bremsregelung bei unbeladenen Fahrzeugen durch frühen Regelbeginn und der Aufbau des maximalen Bremsdrucks bei Vollbetätigung des Bremswertgebers angeführt werden.

Da diese Zusatzfunktion in einer Software umgesetzt wird und lediglich eine bereits im Rahmen der ABS-Funktion ohnehin vorhandene Hardware wie Radrehzahlsensoren und Drucksteuerventile nutzt, wobei lediglich noch ein Bremswertgeber notwendig ist, kann diese Funktion kostengünstig realisiert werden. Insbesondere ist es auf einfache Weise möglich, eine bestehende Bremseinrichtung mit EBD-Funktion nachzurüsten und damit die ALB-Funktion zu ersetzen.

Weiterhin wird die Leistungsfähigkeit der Bremsanlage besser genutzt, wenn beispielsweise bei einer Bremsung die Vorderachsbremsen ausfallen. Denn dann erhöht das System den Differenzschlupf-Schwellwert bzw. den Differenzgeschwindigkeits-Schwellwert bei entsprechend hoher Bremsanforderung.

Nicht zuletzt kann auch das zur Realisierung der erfindungsgemäßen Funktion zwingend notwendige, die Bremsanforderung durch den Fahrer repräsentierende Signal zur Verbesserung der Regelung des ABS herangezogen werden.

Genaueres geht aus der folgenden Beschreibung eines Ausführungsbeispiels hervor.

### Zeichnung

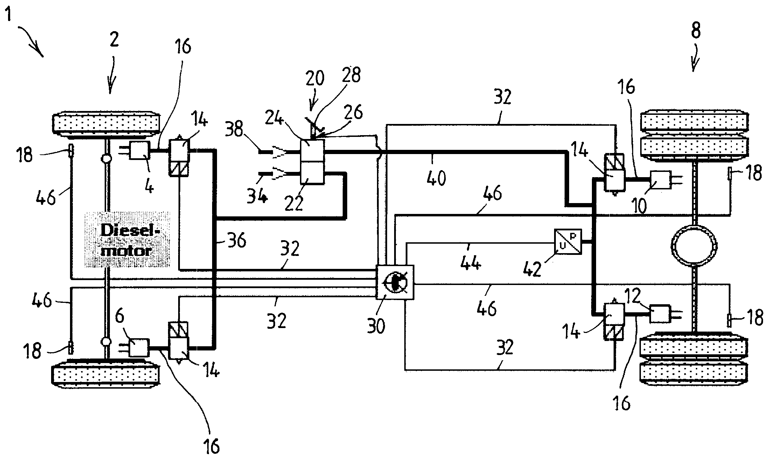

Nachstehend ist ein Ausführungsbeispiel der Erfindung in der Zeichnung dargestellt und in der nachfolgenden Beschreibung näher erläutert. In der Zeichnung zeigt die einzige Figur einen schematischen Schaltplan einer pneumatischen Bremseinrichtung eines Nutzfahrzeugs gemäß-einer-bevorzugten Ausführungsform der Erfindung.

### Beschreibung des Ausführungsbeispiels

Eine in der Figur mit 1 bezeichnete beispielsweise pneumatische Bremseinrichtung für Fahrzeuge, insbesondere für Nutzfahrzeuge, weist an einer Fahrzeugvorderachse 2 zwei pneumatische Bremszylinder 4, 6 sowie an der Fahrzeughinterachse 8 zwei pneumatische Bremszylinder 10, 12 auf. Das Nutzfahrzeug hat beispielsweise eine Dieselmaschine als Frontmotor, welcher über eine hier nicht gezeigte Kardanwelle die Räder der Hinterachse 8 treibt. Den Bremszylindern 4, 6, 10, 12 ist jeweils eine der Bremsdruckmodulation dienende Drucksteuerventilanordnung 14 zugeordnet, hier insbesondere als ABS-Drucksteuerventil zum Drucksenken, Druckhalten und Drucksteigern ausgebildet. Diese sind jeweils durch eine Bremsleitung 16 mit dem jeweiligen Bremszylinder 4, 6, 10, 12 verbunden. Alternativ könnte die Bremseinrichtung 1 auch eine elektro-pneumatische Bremseinrichtung oder ein elektronisches Bremssystem (EBS) mit Druckregelmoduln als Drucksteueranordnung sein.

An die Räder beider Fahrzeugachsen 2, 8 ist ferner jeweils ein Raddrehzahlsensor 18 zur Überwachung des Raddrehverhaltens angeschlossen. Die Bremseinrichtung 1 ist daher für brems- und/oder antriebsschlupfabhängige Bremsdruckmodulation ausgebildet. Die Bremseinrichtung 1 ist weiterhin mit einem Bremswertgeber 20 ausgestattet, welcher hier zwei pneumatische Kanäle 22 und 24 aufweist sowie beispielsweise ein elektrisches Potentiometer 26 zur Erzeugung eines von einer Betätigung eines Fußbremspedals 28 des Bremswertgebers 26 bzw. von der Bremsanforderung abhängigen elektrischen Signals.

Ein elektronisches Steuergerät 30 der Bremseinrichtung 1 steht über ein Leitungsnetz 32 mit den Drucksteuerventilanordnungen 14 der beiden Achsen 2, 8 in Verbindung. Die beiden pneumatischen Kanäle 22 und 24 des Bremswertgebers 20 sind von der Bauart handelsüblicher, zweikreisiger Betriebsbremsventile. Der pneumatische Vorderachskanal 22 des Bremswertgebers 20 ist energiezuflussseitig mit einer mit einem hier nicht gezeigten Druckluftvorrat verbundenen Versorgungsleitung 34 und energieabflussseitig durch eine Steuerleitung 36 mit den Drucksteuerventilen 14 der Vorderachse 2 verbunden. Der pneumatische Hinterachskanal 24 steht mittels einer Versorgungsleitung 38 mit einem ebenfalls nicht gezeigten Druckluftvorrat und mittels einer Steuerleitung 40 mit den Drucksteuerventilen 14 der Hinterachse 8 in Verbindung. Mit den pneumatischen Kanälen 22 und 24 des Bremswertgebers 20 sind daher ein Vorderachskanal und ein Hinterachskanal der pneumatischen Bremseinrichtung 1 des Fahrzeugs steuerbar. In die Steuerleitung 40 des Hinterachskanals kann zudem ein Drucksensor 42 eingebaut sein, welcher über eine elektrische Signalleitung 44 ein elektrisches Drucksignal an das elektronische Steuergerät 30 meldet, welches ebenfalls die Bremsanforderung des Fahrers repräsentiert. Dieser Drucksensor 42 ist aber nicht unbedingt zusätzlich notwendig, um die Bremsanforderung des Fahrers zu erfassen. Vielmehr kann der Bremswunsch des Fahrers vom Potentiometer 26 oder vom Druckssensor 42 oder von einem anderen Sensor erfasst werden. Denkbar ist beispielsweise auch ein die Bremsanforderung des Fahrers repräsentierendes Signal, welches auf einem CAN des Fahrzeugs geführt wird. Es ist jedoch auch möglich, die Bremsanforderung des Fahrers, wie hier im Ausführungsbeispiel beschrieben, durch Signale des Potentiometers 26 wie des Drucksensors 42 redundant zu erfassen.

Das Steuergerät 30 ist ausgebildet, dass die Bremskraftverteilung zwischen den Bremsen 4, 6 der Vorderachse 2 und den Bremsen 10, 12 der Hinterachse 8 bevorzugt in Abhängigkeit von einer Differenzgeschwindigkeit v_{VA} - v_{HA} zwischen den Radgeschwindigkeiten v_{VA} der Räder der Vorderachse 2 und den Radgeschwindigkeiten v_{HA} der Räder der Hinterachse 8 erfolgt. Hierzu empfängt das Steuergerät 30 Signale der Raddrehzahlen der Räder der Vorderachse 2 sowie Signale der Raddrehzahlen der Räder der Hinterachse 8 jeweils von den zugeordneten Raddrehzahlsenoren 18, welche über ein weiteres Leitungsnetz 46 mit dem Steuergerät 30 verbunden sind.

In dem elektronischen Steuergerät 30 wird dann aus den Signalen der Raddrehzahlsensoren 18 die Differenzgeschwindigkeit v_{VA} - v_{HA} zwischen den Radgeschwindigkeiten v_{VA} der Räder der Vorderachse 2 und den Radgeschwindigkeiten v_{HA} der Räder der Hinterachse 8 berechnet. Das elektronische Steuergerät 30 umfasst implementierte Steuerroutinen, welche bei einem Überschreiten eines Differenzgeschwindigkeits-Schwellwerts durch die Differenzgeschwindigkeit v_{VA} - v_{HA} den Bremsdruck in den Bremszylindern 10, 12 der Hinterachse 8 begrenzen. Hierbei bestimmt das elektronische Steuergerät den Differenzgeschwindigkeits-Schwellwert in Abhängigkeit von der durch den Fahrer jeweilige festgelegten Bremsanforderung, welche hier beispielsweise durch das Signal des Potentiometers 26 des Bremswertgebers 20 bzw. das Drucksignal des Drucksensors 42 repräsentiert wird. Insbesondere wird der Differenzgeschwindigkeits-Schwellwert mit steigender Bremsanforderung erhöht. Bei einer relativ geringen Bremsanforderung durch den Fahrer wird daher ein relativ kleiner Differenzgeschwindigkeits-Schwellwert eingestellt und bei einer relativ großen Bremsanforderung ein relativ großer Differenzgeschwindigkeitsschwellwert.

Daher kann mit Hilfe der ABS-Drucksteuerventile 14 die eingangs genannte ALB-Funktion realisiert werden, ohne dass hierfür ein Lastventil notwendig wäre bzw. verwendet wird. Zusätzlich wird die Bremsanforderung des Fahrers berücksichtigt, so dass bei Teilbremsungen mit geringer bis mittlerer Bremsanforderung im unbeladenen Zustand relativ kleine Differenzgeschwindigkeits-Schwellwerte vorgegeben werden und daher feinfühliger geregelt und gebremst werden kann.

Die vom Bremswertgeber 20 bzw. von dessen Potentiometer 26 oder vom Drucksensor 42 gelieferte Information über die Bremsanforderung des Fahrers wird daher zum Erkennen benötigt, ob eine Erhöhung des Bremsdrucks an der Hinterachse 8 vorgenommen werden muss, obwohl anhand der Differenzgeschwindigkeit v_{VA}-v_{HA} eigentlich eine Bremsdruckerhöhung an der Hinterachse 8 unterbunden werden müsste. Dies ist vor allem für den Fall bedeutsam, in welchem die Vorderachsbremsen ausgefallen sind und beim Bremsen die Differenzgeschwindigkeit v_{VA}-v_{HA} deshalb relativ groß ist. Bei hoher Bremsanforderung durch den Fahrer, welche durch ein entsprechendes Signal des Potentiometers 26 des Bremswertgebers 20 bzw. des Drucksensors 42 an das elektronische Steuergerät 30 gemeldet wird, wird dann der Differenzgeschwindigkeits-Schwellwert erhöht, um zu verhindern wird, dass der Bremsdruck an den Bremsen 10, 12 der Hinterachse 8 frühzeitig begrenzt wird.

Aus den gemessenen Radgeschwindigkeiten können auch die Schlupfwerte an den Rädern der Vorderachse 2 bzw. der Hinterachse 8 in Bezug zur Fahrbahn überwacht und dann im Steuergerät 30 ein Differenzschlupf berechnet bzw. ein Differenzschlupf-Schwellwert bestimmt werden. In diesem Fall wird der Differenzschlupf-Schwellwert in Abhängigkeit von der erfassten Fahrer-Bremsanforderung bestimmt und insbesondere mit steigender Bremsanforderung erhöht.

**Bezugszeichenliste**

| | | | |
|---|---|---|---|
| 1 | Bremseinrichtung | 46 | Leitungsnetz |
| 2 | Vorderachse | | |
| 4 | Bremszylinder | | |
| 6 | Bremszylinder | | |
| 8 | Hinterachse | | |
| 10 | Bremszylinder | | |
| 12 | Bremszylinder | | |
| 14 | Drucksteuerventil | | |
| 16 | Bremsleitung | | |
| 18 | Raddrehzahlsensor | | |
| 20 | Bremswertgeber | | |
| 22 | Vorderachskanal | | |
| 24 | Hinterachskanal | | |
| 26 | Potentiometer | | |
| 28 | Fußbremspedal | | |
| 30 | Steuergerät | | |
| 32 | Leitungsnetz | | |
| 34 | Versorgungsleitung | | |
| 36 | Steuerleitung | | |
| 38 | Versorgungsleitung | | |
| 40 | Steuerleitung | | |
| 42 | Drucksensor | | |
| 44 | Signalleitung | | |

## Patentansprüche

1. Verfahren zur elektronischen Regelung der Bremskraftverteilung in Abhängigkeit von einem Differenzschlupf oder Differenzgeschwindigkeit zwischen wenigstens einem Rad der Vorderachse (2) und wenigstens einem Rad der Hinterachse (8) eines Fahrzeugs, bei welcher bei einem Überschreiten eines Differenzschlupf-Schwellwerts oder eines Differenzgeschwindigkeits-Schwellwerts durch den Differenzschlupf oder die Differenzgeschwindigkeit der Bremsdruck an der Hinterachse begrenzt wird, **dadurch gekennzeichnet, dass** der Differenzschlupf-Schwellwert oder der Differenzgeschwindigkeits-Schwellwert in Abhängigkeit von der Bremsanforderung bestimmt wird.

2. Verfahren nach Anspruch 1, **dadurch gekennzeichnet, dass** der Differenzschlupf-Schwellwert oder der Differenzgeschwindigkeits-Schwellwert mit steigender Bremsanforderung erhöht wird.

3. Computerprogrammprodukt mit Programmteilen zur Ausführung des Verfahrens nach einem der vorhergehenden Ansprüche.

4. Vorrichtung zur elektronischen Regelung der Bremskraftverteilung in Abhängigkeit von einem Differenzschlupf oder Differenzgeschwindigkeit zwischen wenigstens einem Rad der Vorderachse (2) und wenigstens einem Rad der Hinterachse (8) eines Fahrzeugs, mit
a) einem Sensor (18) zur Messung der Raddrehzahlen des Rads der Vorderachse (2),
b) einem Sensor (18) zur Messung der Raddrehzahlen des Rads der Hinterachse (8),
c) einem elektronischen Steuergerät (30) zur Berechnung eines Differenzschlupfs oder einer Differenzdrehzahl zwischen dem wenigstens einen Rad der Vorderachse (2) und dem wenigstens einen Rad der Hinterachse (8), wobei
d) das elektronische Steuergerät (30) derart ausgebildet ist, dass bei einem Überschreiten eines Differenzschlupf-Schwellwerts oder eines Differenzgeschwindigkeits-Schwellwerts durch den Differenzschlupf oder durch die Differenzgeschwindigkeit der Bremsdruck an der Hinterachse (8) begrenzt wird, **dadurch gekennzeichnet, dass**
e) ein Bremswertgeber (20, 26, 42) zur Erzeugung eines von einer Bremsanforderung abhängigen Signals vorgesehen ist, und
f) das elektronische Steuergerät (30) weiterhin derart ausgebildet ist, dass es den Differenzschlupf-Schwellwert oder den Differenzgeschwindigkeits-Schwellwert in Abhängigkeit von dem die Bremsanforderung repräsentierenden Signal des Bremswertgebers (20, 26, 42) bestimmt.

5. Vorrichtung nach Anspruch 4, **dadurch gekennzeichnet, dass** das elektronische Steuergerät (30) weiterhin derart ausgebildet ist, dass es den Differenzschlupf-Schwellwert oder den Differenzgeschwindigkeits-Schwellwert mit steigender Bremsanforderung erhöht.

6. Vorrichtung nach Anspruch 4 oder 5, **dadurch gekennzeichnet, dass** der Bremswertgeber (20, 26, 42) ein von einer Betätigung eines Bremspedals (28) abhängiges elektrisches Signal für das Steuergerät (30) erzeugt.

## Claims

1. Method for the electronic control of the brake force distribution according to a differential slip or differential speed between at least one wheel of the front axle (2) and at least one wheel of the rear axle (8) of a vehicle, in which, if a differential slip threshold value or a differential speed threshold value is exceeded by the differential slip or the differential speed, the brake pressure at the rear axle is limited, **characterised in that** the differential slip threshold value or the differential speed threshold value is determined according to the braking request.

2. Method according to claim 1, **characterised in that** the differential slip threshold value or the differential speed threshold value is increased as the braking request increases.

3. Computer programme product for executing the method according to any of the preceding claims.

4. Device for the electronic control of the brake force distribution according to a differential slip or differential speed between at least one wheel of the front axle (2) and at least one wheel of the rear axle (8) of a vehicle, having
a) a sensor (18) for measuring the wheel speeds of the wheel of the front axle (2),
b) a sensor (18) for measuring the wheel speeds of the wheel of the rear axle (8),
c) an electronic control device (30) for calculating a differential slip or a differential rotational speed between the at least one wheel of the front axle (2) and the at least one wheel of the rear axle (8), wherein
d) the electronic control device (30) is embodied in such a way that, when a differential slip threshold value or a differential speed threshold value is exceeded by the differential slip or by the differential speed, the brake pressure at the rear axle (8) is limited, **characterised in that**
e) a brake value transmitter (20, 26, 42) for generating a signal which is dependent on a braking request is provided, and
f) the electronic control device (30) is further embodied in such a way that it determines the differential slip threshold value or the differential speed threshold value according to the signal of the brake value transmitter (20, 26, 42) which represents the braking request.

5. Device according to claim 4, **characterised in that** the electronic control device (30) is further embodied in such a way that it increases the differential slip threshold value or the differential speed threshold value as the braking request increases.

6. Device according to claim 4 or 5, **characterised in that** the brake value transmitter (20, 26, 42) generates an electrical signal for the control device (30) which is dependent on activation of a brake pedal (28).

## Revendications

1. Procédé de régulation électronique de la répartition de la force de freinage, en fonction d'une différence de glissement ou d'une différence de vitesse entre au moins une roue de l'essieu (2) avant et au moins une roue de l'essieu (8) arrière d'un véhicule, dans lequel on limite la pression de freinage à l'essieu arrière, si une valeur de seuil de la différence de glissement ou une valeur de seuil de la différence de vitesse est dépassée par la différence de glissement ou par la différence de vitesse, **caractérisé en ce que** l'on détermine la valeur de seuil de la différence de glissement ou la valeur de seuil de la différence de vitesse, en fonction de la demande de freinage.

2. Procédé suivant la revendication 1, **caractérisé en ce que** l'on élève la valeur de seuil de la différence de glissement ou la valeur de seuil de la différence de vitesse au fur et à mesure qu'augmente la demande de freinage.

3. Produit de programme d'ordinateur, ayant des parties de programme pour effectuer le procédé suivant l'une des revendications précédentes.

4. Système de régulation électronique de la répartition de la force de freinage, en fonction d'une différence de glissement ou d'une différence de vitesse entre au moins une roue de l'essieu (2) avant et au moins une roue de l'essieu (8) arrière d'un véhicule, comprenant
a) un capteur (18) de mesure des vitesses de rotation de la roue de l'essieu (2) avant,
b) un capteur (18) de mesure des vitesses de rotation de la roue de l'essieu (8) arrière,
c) un appareil (30) électronique de commande pour calculer une différence de glissement ou une différence de vitesse de rotation entre la au moins une roue de l'essieu (2) avant et la au moins une roue de l'essieu (8) arrière, dans lequel
d) l'appareil (30) électronique de commande est constitué de manière à limiter la pression de freinage à l'essieu (8) arrière, si une valeur de seuil de la différence de glissement ou une valeur de seuil de la différence de vitesse est dépassée par la différence de glissement ou par la différence de vitesse, **caractérisé en ce que**
e) il est prévu un indicateur (20, 26, 42) de valeur de freinage pour produire un signal, qui dépend d'une demande de freinage et
f) l'appareil (30) électronique de commande est constitué, en outre, de manière à déterminer la valeur de seuil de la différence de glissement ou la valeur de seuil de la différence de vitesse, en fonction du signal, représentant la demande de freinage, de l'indicateur (20, 26, 42) de valeur de freinage.

5. Système suivant la revendication 4, **caractérisé en ce que** l'appareil (30) électronique de commande est constitué, en outre, pour élever la valeur de seuil de la différence de glissement ou la valeur de seuil de la différence de vitesse au fur et à mesure qu'augmente la demande de freinage.

6. Système suivant la revendication 4 ou 5, **caractérisé en ce que** l'indicateur (20, 26, 42) de valeur de frein produit un signal électrique, qui dépend d'un actionnement d'une pédale (28) de frein, pour l'appareil (30) de commande.
